# EUROPÄISCHE PATENTSCHRIFT

(11) **EP 1 115 991 B1**
(45) Veröffentlichungstag und Bekanntmachung des Hinweises auf die Patenterteilung: **30.11.2005**
(21) Anmeldenummer: 00951219.5
(22) Anmeldetag: 10.06.2000
(51) Int. Cl.: F16K 27/02, F02D 9/10, F02M 25/07

(54) **KLAPPENVENTIL**
FLAP VALVE
SOUPAPE A CLAPET

(30) Priorität: 21.07.1999 DE 19934113
(43) Veröffentlichungstag der Anmeldung: 18.07.2001
(73) Patentinhaber: ROBERT BOSCH GMBH, 70442 Stuttgart (DE)
(72) Erfinder: KRIMMER, Erwin, D-73655 Pluederhausen (DE); KRAUSE, Ralph, D-71334 Waiblingen (DE)
(86) Internationale Anmeldenummer: PCT/DE2000/001917
(87) Internationale Veröffentlichungsnummer: WO 2001/007808

(56) Entgegenhaltungen:
- EP-A- 0 200 868
- DE-A- 19 729 335
- US-A- 5 531 205

## Beschreibung

### Stand der Technik

Die Erfindung betrifft ein Klappenventil zum Steuern eines Gasstroms, insbesondere eines Abgasstroms einer Brennkraftmaschine, der im Oberbegriff des Anspruchs 1 definierten Gattung.

Bei einer bekannten Anordnung einer Drosselklappe in einem Abgaskanal einer Brennkraftmaschine (DE 43 05 123 A1) ist die die Drosselklappe tragende Klappenwelle, die sich parallel zur Klappenebene erstreckt, beiderseits durch eine Lagerbohrung in der Kanalwand des Abgaskanals geführt und ragt dort jeweils durch eine Lagerhülse hindurch. Zur Erzielung einer größeren Dichtigkeit bei Vermeidung einer Schwergängigkeit der Klappenbetätigung sind die durch Federkraft in jeweils einem Lagergehäuse axial vorgespannten Lagerhülsen innerhalb der Lagergehäuse radial verschieblich, wodurch Maßabweichungen zwischen an der Kanalwand ausgebildeten Anschlagflächen für die Drosselklappe und der Klappenwellenlagerung beim ersten Schließen der Drosselklappe selbsttätig kompensiert werden.

Die US 5,531,205 zeigt ein Klappenventil mit einer in einem Ventilrohr an einer Klappenwelle schwenkbar gelagerten Ventilklappe, wobei die Klappenwelle gegenüber der Achse des Ventilrohrs einen spitzen Winkel einschließt. Bei diesem Klappenventil ist der für die Klappenwelle erforderliche Wellendurchbruch außerhalb dem Bereich der Dichtfläche zwischen Ventilrohr und Ventilklappe.

### Vorteile der Erfindung

Das Klappenventil mit den Merkmalen des Anspruchs 1 hat den Vorteil, dass auf ein Dichtelement zwischen der Ventilklappe und dem Ventilrohr verzichtet werde kann, da sich die Rohrwandung aufgrund ihrer Elastizität in der Schließstellung der Ventilklappe dicht an den Rand der Ventilklappe anschmiegen kann.

Durch die in den weiteren Ansprüchen aufgeführten Maßnahmen sind vorteilhafte Weiterbildungen und Verbesserungen des im Anspruch 1 angegebenen Klappenventils möglich.

Gemäß einer vorteilhaften Ausführungsform der Erfindung liegt der Winkel α zwischen Klappenwelle und Achse des Ventilrohrs in einem Winkelbereich gleich oder größer 10° und kleiner 90° und wird vorzugsweise mit 45° gewählt. Bei Winkelwerten α, die kleiner als 45° sind, ist zu beachten, dass die Ventilklappe dann nicht mehr vollständig geöffnet werden kann. Da aber die Kennlinie des Gasdurchsatzes als Funktion der freien Querschnittsfläche des Ventilrohrs bei Klappenventilen im allgemeinen stark degressiv verläuft, kann auch dieser Winkelbereich zur Erzielung großer Drehwege und kleiner Drehmomente an der Klappenwelle genutzt werden.

Wird der spitze Winkel α = 45° gewählt, so verdoppelt sich gegenüber dem eingangs genannten bekannten Klappenventil der Drehwinkel ω der Klappenwelle, um die Ventilklappe zwischen Schließ- und Offenstellung zu bewegen, auf ω = 180°. Gleichzeitig reduziert sich das für die Drehbewegung aufzubringende Drehmoment auf die Hälfte des bei den bekannten Klappenventilen erforderlichen Wertes.

Gemäß einer vorteilhaften Ausführungsform der Erfindung ist das Ventilrohr in eine im Mantel eines weiteren Rohrs vorgesehene Öffnung gasdicht eingesetzt und so ausgerichtet, dass die Klappenwelle rechtwinklig zur Achse des weiteren Rohrs verläuft. Durch diese konstruktive Gestaltung kann z. B. der im Ansaugsystem der Brennkraftmaschine angesaugten Frischluft Abgas dosiert zugeführt werden, wenn das Klappenventil als Abgasrückführventil im Ansaugtrakt der Brennkraftmaschine verwendet wird, wobei das weitere Rohr das zur Brennkraftmaschine geführte Luftansaugrohr bildet und das Ventilrohr an einer Abgasleitung der Brennkraftmaschine angeschlossen ist. Die Anordnung von Ventilrohr und Klappenwelle ergibt eine bauraumsparende, kompakte Ausführung. Alternativ könnte bei ausreichend großem Einbauraum auch das Ventilrohr senkrecht und die Klappenwelle schräg zur Achse des Luftansaugrohrs ausgerichtet werden.

Gemäß einer bevorzugten Ausführungsform der Erfindung ist die Ventilklappe in Form und Fläche dem lichten Querschnitt des Dünnwandrohrs angepasst. Um die Dichtheit des Klappenventils an die insbesondere bei dessen Verwendung als Abgasrückführventil hohe Anforderungen gestellt werden, zu gewährleisten, muss die Form und Fläche der Ventilklappe exakt an die Innenkontur des Dünnwandrohrs angepasst oder etwas größer gemacht werden. Bevorzugt wird dabei eine kreisrunde Form des lichten Querschnitts des Dünnwandrohrs und entsprechend eine kreisrunde Form der Ventilklappe. Alternativ kann auch eine elliptische oder ovale Form in Betracht kommen. Bei der kreisrunden Ausführung wird der Durchmesser der Ventilklappe gleich oder größer als der lichte Durchmesser des Dünnwandrohrs bemessen. Die Ventilklappe ist bezüglich der Klappenwelle im ersten Fall (Durchmesser der Klappenwelle gleich dem Innendurchmesser des Ventilrohrs) dann so angestellt, daß in der Schließstellung der Ventilklappe deren Flächennormale mit der Achse des Dünnwandrohrs fluchtet, und im zweiten Fall (Durchmesser der Ventilklappe größer als der Innendurchmesser des Ventilrohrs) so ausgerichtet, daß in der Schließstellung der Ventilklappe deren Flächennormale unter einem spitzen Winkel zur Achse des Dünnwandrohrs verläuft. Im letzeren Fall wird in der Schließstellung das Dünnwandrohr verformt, wobei sich annähernd eine Ellipse ergibt, deren großer Halbmesser dem Radius der Ventilklappe und deren Umfang dem Umfang der Rohrinnenwand des Dünnwandrohrs entspricht.

Da sich beim Öffnen des Klappenventils zuerst das Dünnwandrohr rückdeformiert, ergeben sich bei gleichem Drehwinkel der Klappenwelle zunächst kleinere öffnungsquerschnitte. Dadurch wird eine bessere Kleinmengendosierbarkeit, d.h. eine Spreizung der Kennlinie des Gasdurchsatzes über den Drehwinkel, im Bereich kleiner Drehwinkel erreicht.

Gemäß einer vorteilhaften Ausführungsform der Erfindung ist das Dünnwandrohr in einen steifen Rohrstutzen mit Radialspiel eingesetzt und mit seinem einen Ende an dem Rohrstutzen befestigt. Dadurch ist das Dünnwandrohr (außer in Axialrichtung) frei verformbar und kann sich an die Ventilklappe sehr gut anschmiegen und damit eine gute Dichtwirkung erzielen. Um diese Eigenschaft zu unterstützen, darf die Wandstärke des Dünnwandrohrs nicht zu groß und der Durchmesser des Dünnwandrohrs nicht zu klein bemessen werden. Unter Berücksichtigung einer ausreichenden Festigkeit und eines noch akzeptablen Schwingungsverhaltens des Dünnwandrohrs hat sich ein Durchmesser des Dünnwandrohrs von 10 - 200 mm und eine Wandstärke von 0,05 - 2 mm als vorteilhaft erwiesen. Durch den schräggestellten Verlauf der Klappenwelle werden auch die gleichmäßige Deformierbarkeit des Dünnwandrohrs störende Inhommogenitäten in dem Dünnwandrohr vermieden, wie sie beispielsweise durch Wanddurchbrüche zum Durchtritt der Klappenwelle entstehen würden.

### Zeichnung

Die Erfindung ist anhand von in der Zeichnung dargestellten Ausführungsbeispielen in der nachfolgenden Beschreibung näher erläutert. Es zeigen:
- Fig. 1: einen Längsschnitt eines als Abgasrückführventil im Ansaugtrakt einer Brennkraftmaschine eingesetzten, nicht alle Erfindungsmerkmale aufweisenden Klappenventils,
- Fig. 2: eine gleiche Darstellung wie in Fig. 1 eines modifizierten Klappenventils,
- Fig. 3: ausschnittweise einen Längsschnitt des Klappenventils in Fig. 2 mit Ventilrohr und modifizierter Ventilklappe in drei verschiedenen Schwenkstellungen der Ventilklappe,
- Fig. 4: eine Ansicht des Klappenventils in Fig. 3 in Richtung der Ventilrohrachse bei den drei verschiedenen Schwenkstellungen der Ventilklappe,
- Fig. 5 und 6: jeweils einen Längsschnitt eines Klappenventils gemäß weiterer Ausführungsbeispiele.

### Beschreibung der Ausführungsbeispiele

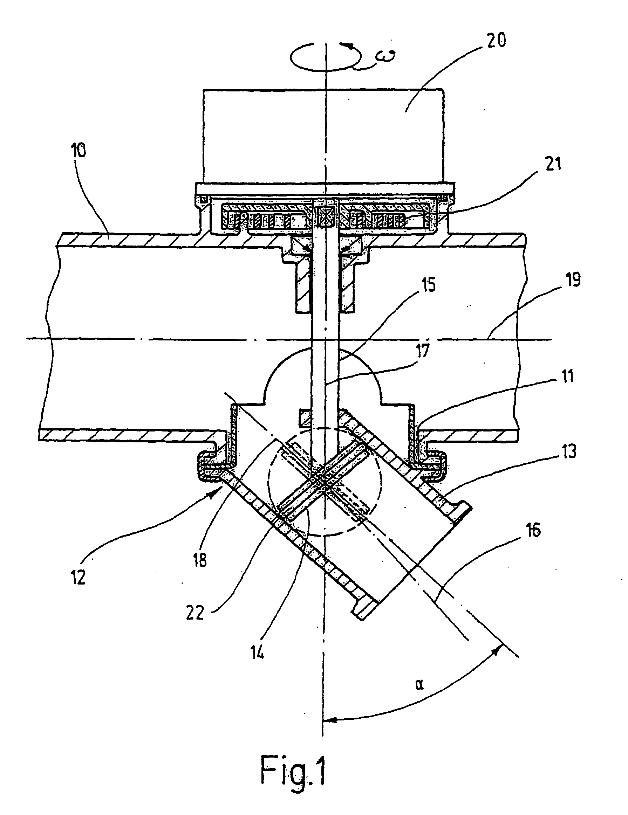

Das in Fig. 1 im Längsschnitt zum besseren Verständnis der anschließend beschriebenen Erfindung schematisiert dargestellte Klappenventil dient als Abgasrückführventil im Ansaugtrakt einer Brennkraftmaschine. Dieser weist ein zu der Brennkraftmaschine führendes Ansaugrohr 10 für Luft auf, in dem üblicherweise eine hier nicht dargestellte Drosselklappe zur Steuerung des Luftstroms angeordnet ist. Im Mantel des Ansaugrohrs 10 ist eine Öffnung 11 vorgesehen, in die das Klappenventil 12 gasdicht eingesetzt ist. Das Klappenventil 12 weist ein Ventilrohr 13, das als ein an einem hier nicht dargestellten Abgaskanal der Brennkraftmaschine anzuschließender Rohrstutzen ausgebildet ist, und eine im Ventilrohr 13 angeordnete Ventilklappe 14 auf, die auf einer motorisch antreibbaren Klappenwelle 15 sitzt und zwischen zwei Endstellungen schwenkbar ist, wobei sie den lichten Querschnitt des Ventilrohrs 13 in der einen Endstellung (Schließstellung) vollständig überdeckt und in der anderen Endstellung (Offenstellung) maximal freigibt. Die Klappenwelle 15 ist dabei so angeordnet, dass ihre Achse 17 mit der Achse 18 des Ventilrohrs 13 einen spitzen Winkel α einschließt. Dieser spitze Winkel α ist in der Fig. 1 zu α = 45° gewählt, kann aber auch in einem Winkelbereich von gleich oder größer 10° und kleiner 90° liegen. Die Ventilklappe 14 ist dabei bezüglich der Klappenwelle 15 so ausgerichtet, daß die Flächennormale 16 der Ventilklappe 14 bei in Schließstellung sich befindlicher Ventilklappe 14 mit der Achse 18 des Ventilrohrs 13 zumindest annähernd fluchtet. Im Ausführungsbeispiel der Fig. 1 ist die Klappenwelle 15 rechtwinklig zur Achse 19 des Ansaugrohrs 10 angeordnet und in der Rohrwandung des Ansaugrohrs 10 drehbar gelagert. Sie ragt mit ihrem einen Wellenende durch die Mantelöffnung 11 des Ansaugrohrs 10 hindurch in das Ventilrohr 13 des Klappenventils 12 hinein und trägt an diesem Wellenende die Ventilklappe 14. Das von der Ventilklappe 14 abgekehrte andere Wellenende steht rechtwinklig über die Rohrwandung des Ansaugrohrs 10 vor. An diesem Wellenende greift einerseits ein Stellmotor 20 zum Drehen der Klappenwelle 15 und andererseits eine als Spiralfeder ausgebildete Rückstellfeder 21 an, die die Klappenwelle 15 in eine definierte Grundposition zurückstellt, wobei die Grundstellung durch einen hier nicht dargestellten Anschlag festgelegt ist, an dem die Klappenwelle 15 und/oder die Ventilklappe 14 anliegt. Die Grundposition der Klappenwelle 15 ist dabei so eingestellt, daß die Ventilklappe 14 in der Grundposition ihre in Fig. 1 dargestellte Schließstellung einnimmt. Das Ventilrohr 13 weist einen kreisrunden lichten Querschnitt auf, und der Durchmesser der ebenfalls kreisrunden Ventilklappe 14 ist gleich oder wenig kleiner als der lichte Durchmesser des Ventilrohrs 13 bemessen. Zur Erzielung einer guten Dichtwirkung ist in der Schließstellung der Ventilklappe 14 zwischen dieser und der Innenwand des Ventilrohrs 13 ein Dichtelement 22 wirksam, das an der Ventilklappe 14 über deren Umfang umlaufend vorstehend angeordnet ist.

In Fig. 1 ist das Klappenventil 12 in seiner Schließstellung gezeigt. Durch Drehung der Klappenwelle 15 um einen Drehwinkel ω = 180° wird die Ventilklappe 14 in ihre Offenstellung überführt, die in Fig. 1 strichliniert dargestellt ist. Bei dieser Drehbewegung der Klappenwelle 15 führt die Ventilklappe 14 eine Art Taumelbewegung aus, bei der jeder Punkt auf dem Rand oder Umfang der Ventilklappe 14 sich längs der imaginären Oberfläche einer Kugel bewegt.

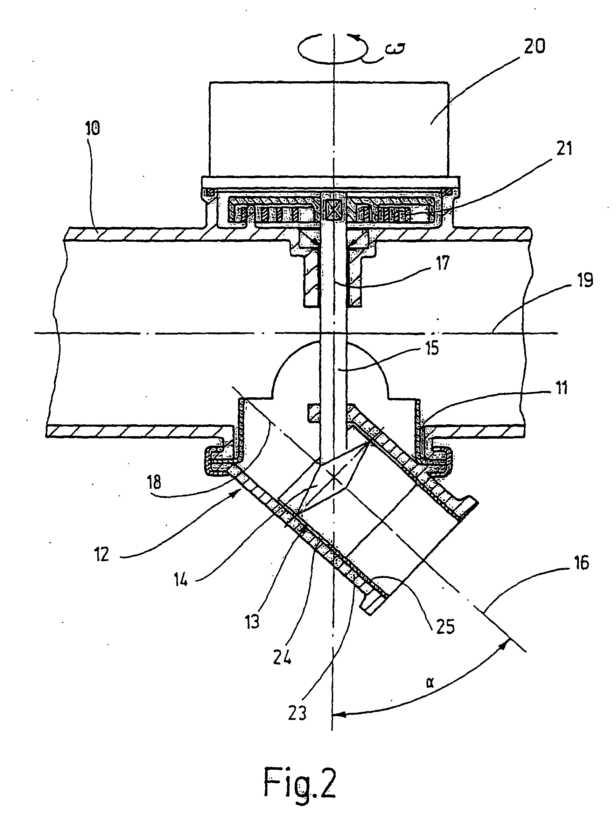

Bei dem in Fig. 2 dargestellten modifizierten Klappenventil 12 bildet das Ventilrohr 13 nicht selbst den an den Abgaskanal der Brennkraftmaschine anzuschließenden Rohrstutzen sondern ist als elastisch verformbares Dünnwandrohr 24 ausgebildet, das in den steifen Rohrstutzen 23 mit Radialspiel eingesetzt und mit seinem einen Ende an dem Rohrstutzen 23 befestigt ist. Hierzu ist das Dünnwandrohr 24 mit einem Rohrendabschnitt in einer Hülse 25 eingespannt, die form- und kraftschlüssig im Rohrstutzen 23 aufgenommen ist. Die in gleicher Weise wie vorstehend beschrieben an der Klappenwelle 15 befestigte Ventilklappe 14 ist in Form und Fläche dem lichten Querschnitt des Dünnwandrohrs 24 angepaßt. Im Ausführungsbeispiel der Fig. 2 weist das Dünnwandrohr 24 einen kreisrunden lichten Querschnitt auf, und der Durchmesser der ebenfalls kreisrund ausgeführten Ventilklappe 14 ist gleich dem lichten Durchmesser des Dünnwandrohrs 24 bemessen. Die Ventilklappe 14 ist bezüglich der Klappenwelle 15 wiederum so ausgerichtet, daß in der Schließstellung der Ventilklappe 14 deren Flächennormale 16 mit der Achse 18 des Dünnwandrohrs 24 fluchtet. Durch die Elastizität schmiegt sich das Dünnwandrohr 24 in der Schließstellung der Ventilklappe 14 (in Fig. 2 dargestellt) an den Rand der kreisförmigen Ventilklappe 14 an und gewährleistet eine ausreichend große Dichtigkeit des Klappenventils 12 in der Schließstellung der Ventilklappe 14, ohne daß es eines zusätzlichen Dichtelements 22 wie bei dem Klappenventil 12 gemäß Fig. 1 bedarf. Der übrige Aufbau des Klappenventils 12 in Fig. 2 und auch dessen Funktionsweise ist identisch wie zu Fig. 1 beschrieben, so daß gleiche Bauteile mit gleichen Bezugszeichen versehen sind.

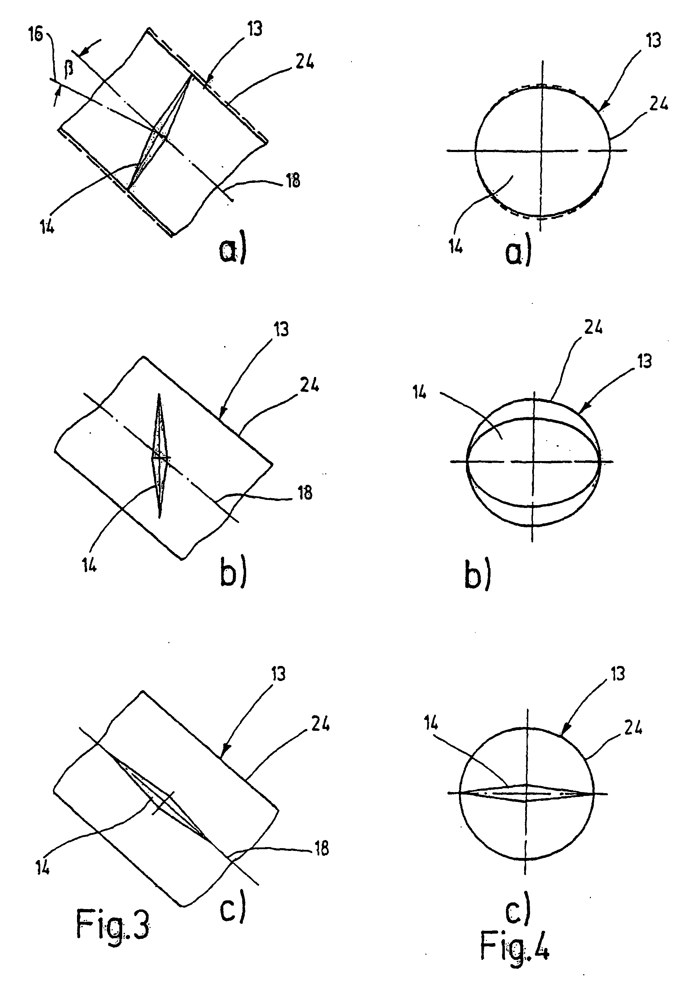

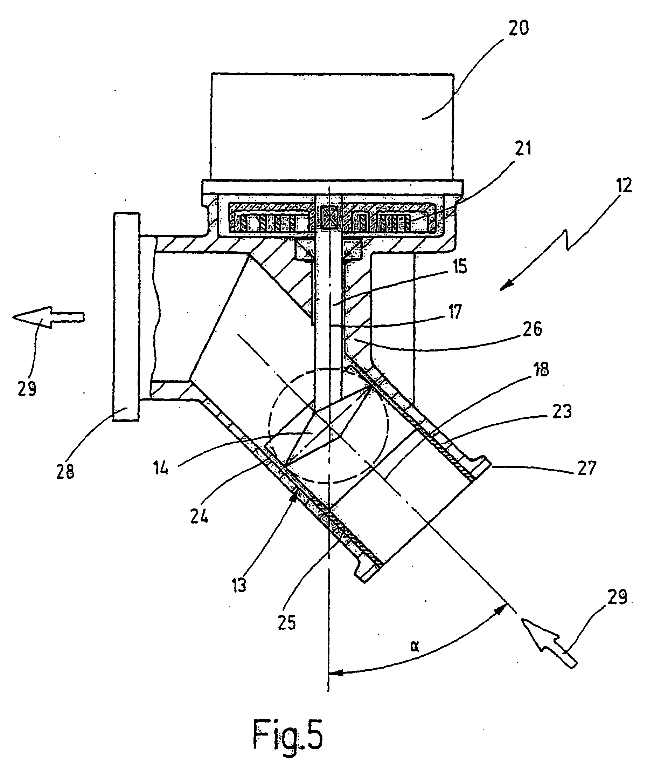

In Fig. 3 und 4 ist ausschnittweise das Klappenventil 12 mit einer modifizierten Ventilklappe 14 dargestellt, und zwar einmal im Längsschnitt (Fig. 3) und einmal in einer Ansicht längs der Achse 18 des Ventilrohrs 13 (Fig. 4), jeweils in drei unterschiedlichen Schwenkstellungen der Ventilklappe 14. Die wiederum kreisrund ausgeführte Ventilklappe 14 ist insofern modifiziert, als ihr Durchmesser etwas größer bemessen ist als der lichte Durchmesser des Dünnwandrohrs 24. Wie bei dem Klappenventil 12 in Fig. 2 ist auch hier die nicht dargestellte Klappenwelle so ausgerichtet, daß ihre Achse mit der Achse 18 des Dünnwandrohrs 24 den spitzen Winkel α = 45° einschließt. Aufgrund ihres größeren Durchmessers ist die Ventilklappe 14 an der Klappenwelle 15 so befestigt, daß in ihrer Schließstellung ihre Flächennormale 16 zu der Achse 18 des Dünnwandrohrs 24 unter einem spitzen Winkel β verläuft. Dieser Winkel β ist um so größer je größer die Durchmesserdifferenz zwischen dem Durchmesser der Ventilklappe 14 und dem lichten Durchmesser des Dünnwandrohrs 24 ist. Durch diese Durchmesserdifferenz verformt sich das Dünnwandrohr 24 in der Schließstellung der Ventilklappe 14 zu einer Ellipse, deren großer Halbmesser dem Radius der Ventilklappe 14 entspricht und die in ihrer ersten Näherung den gleichen Umfang wie der unverformte Kreis des Dünnwandrohrs 24 aufweist. Bei geöffnetem Klappenventil 12 hat die Ventilklappe 14 immer nur an zwei Punkten Kontakt mit dem Dünnwandrohr 24. In der Darstellung der Fig. 3a und Fig. 4a nimmt die Ventilklappe 14 ihre Schließstellung ein. Wie strichpunktiert angedeutet ist, ist dabei das Dünnwandrohr 24 elastisch verformt. In der Darstellung der Fig. 3b und 4b ist das Klappenventil 12 teilweise und in der Darstellung in Fig. 3c und Fig. 4c ist das Klappenventil 12 maximal geöffnet. Bei einem Winkel α = 45° zwischen der Achse der Klappenwelle und der Achse 18 des Dünnwandrohrs 24 legt hierbei die Klappenwelle wiederum den Drehwinkel ω = 180° zurück.

In Fig. 5 ist ein modifiziertes Klappenventil 12 im Längsschnitt dargestellt. Insoweit es mit dem in Fig. 2 dargestellten Klappenventil übereinstimmt sind gleiche Bauteile mit gleichen Bezugszeichen versehen. Das Klappenventil 12 weist ein Ventilgehäuse 26 auf, in dem der das Ventilrohr 13 aufnehmende Rohrstutzen 23 einstückig integriert ist. Das Ventilrohr 13 ist wiederum als elastisch verformbares Dünnwandrohr 24 ausgebildet, das in dem Rohrstutzen 23 aufgenommen ist. Die Klappenwelle 15 ist drehbar im Ventilgehäuse 26 gelagert und gegenüber der Achse 18 des Ventilrohrs 13 wiederum um den spitzen Winkel α (hier α = 45°) verdreht. Die Ventilklappe 14 ist bezüglich der Achse 17 der Klappenwelle 15 wiederum so ausgerichtet, daß ihre Flächennormale 16 mit der Ventilrohrachse 18 fluchtet. Die Klappenwelle 15 ragt mit ihrem ventilklappenfernen Ende aus dem Ventilgehäuse 26 heraus. An diesem Wellenende greift der Stellmotor 20 und die Rückstellfeder 21 an. Zur Einbindung des Klappenventils 12 in einen Gasstrom, z.B. dem Abgasstrom einer Brennkraftmaschine, weist das Ventilgehäuse 26 zwei jeweils einem Rohrende des Ventilrohrs 13 zugeordnete Anschlußflansche 27,28 auf, die einstückig mit dem Rohrstutzen 23 ausgebildet sind. Die Flanschachse des einen Anschlußflansches 26 fluchtet mit der Ventilrohrachse 18 und die Flanschachse des anderen Anschlußflansches 28 verläuft rechtwinklig zur Klappenwelle 15. Die Wirkungsweise dieses Klappenventils 12 ist die gleiche wie vorstehend zu Fig. 1 und 2 beschrieben. Der das Klappenventil 12 durchsetzende Gasstrom ist mit Pfeile 29 angedeutet.

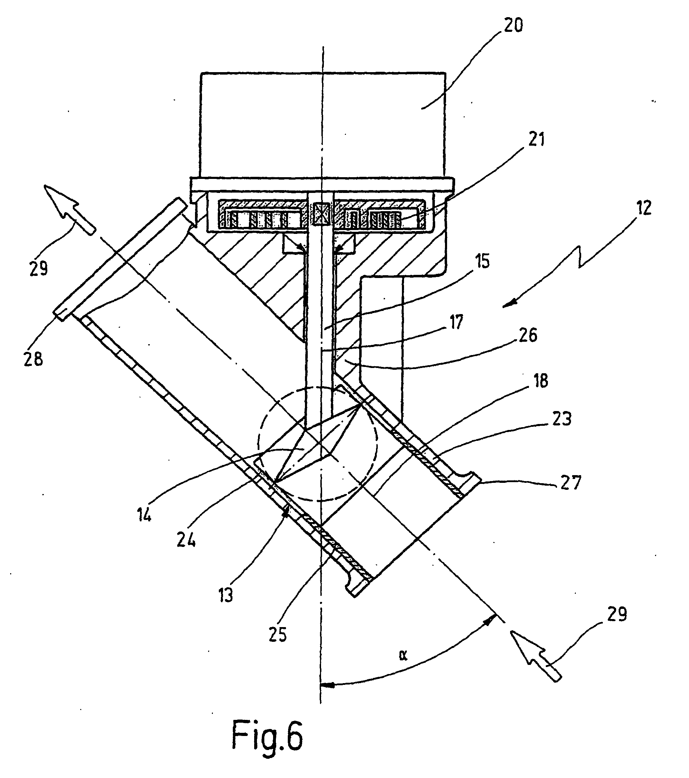

Das in Fig. 6 im Längsschnitt dargestellte weitere Klappenventil 12 unterscheidet sich von dem Klappenventil 12 gemäß Fig. 5 nur dadurch, daß der Rohrstutzen 23 nicht abgeknickt sondern geradlinig ausgeführt ist. Demzufolge fluchten die Flanschachsen der am Ventilgehäuse 26 ausgebildeten beiden Anschlußflansche 27,28 miteinander und mit der Achse 18 des Ventilrohrs 13.

Die beiden Klappenventile gemäß Fig. 5 und 6 werden beispielsweise als Abgasrückführventile in die Abgasrückführleitung einer Brennkraftmaschine eingesetzt. In diesem Fall werden die beiden Anschlußflansche 27,28 an entsprechende, an zwei Leitungsabschnitten der Abgasrückführleitung ausgebildete Flansche angesetzt und mit diesen gasdicht verbunden.

## Patentansprüche

1. Klappenventil zum Steuern eines Gasstroms, mit einem den Gasstrom führenden Ventilrohr (13) und einer im Ventilrohr (13) angeordneten, zwischen einer Offenstellung und einer Schließstellung schwenkbaren Ventilklappe (14), die auf einer verstellbaren Klappenwelle (15) drehfest sitzt und einen lichten Ventilrohrquerschnitt in dem Ventilrohr (13) in der Schließstellung überdeckt und in der Offenstellung maximal freigibt, wobei die Klappenwelle (15) so ausgerichtet ist, dass ihre Achse (17) mit der Achse (18) des Ventilrohrs (13) einen spitzen Winkel (α) einschließt, **dadurch gekennzeichnet, dass** das Ventilrohr (13) als elastisch verformbares Dünnwandrohr (24) ausgebildet ist.

2. Klappenventil nach Anspruch 1, **dadurch gekennzeichnet, dass** der Winkel (α) zwischen Achse (17) der Klappenwelle (15) und Achse (18) des Ventilrohrs (13) im Winkelbereich zwischen gleich oder größer 10° und kleiner 90° liegt und vorzugsweise 45° beträgt.

3. Klappenventil nach Anspruch 1 oder 2, **dadurch gekennzeichnet, dass** das Ventilrohr (13) in einem Gehäuse (26) integriert ist, in dem die Klappenwelle (15) drehbar gelagert ist, und dass das Gehäuse (26) zwei jeweils einem Ventilrohrende zugeordnete Anschlussflansche (27, 28) aufweist.

4. Klappenventil nach Anspruch 1 oder 2, **dadurch gekennzeichnet, dass** das Ventilrohr (13) in eine im Mantel eines weiteren, einen Gasstrom führenden Rohrs (10) vorgesehene Mantelöffnung (11) gasdicht eingesetzt und die Klappenwelle (15) quer zur Achse (19) des weiteren Rohrs (10) ausgerichtet ist.

5. Klappenventil nach Anspruch 4, **dadurch gekennzeichnet, dass** die Klappenwelle (15) in der Wandung des weiteren Rohrs (10) drehbar gelagert ist und mit einem Wellenende durch die Mantelöffnung (11) des weiteren Rohrs (10) hindurch in das Ventilrohr (13) hineinragt und an diesem Wellenende die Ventilklappe (14) trägt.

6. Klappenventil nach Anspruch 3, **dadurch gekennzeichnet, dass** die Klappenwelle (15) mit ihrem klappenfernen Ende aus dem Gehäuse (26) vorsteht und dass an diesem Wellenende ein Stellmotor (20) und eine die Klappenwelle (15) in eine Grundposition zurückdrehende Rückstellfeder (21) angreifen und dass die Grundposition der Klappenwelle (15) durch einen Anschlag festgelegt ist.

7. Klappenventil nach Anspruch 6, **dadurch gekennzeichnet, dass** die Grundposition der Klappenwelle (15) so eingestellt ist, dass die Ventilklappe (14) in der Grundposition der Klappenwelle (15) ihre Schließstellung einnimmt.

8. Klappenventil nach einem der Ansprüche 1 - 7, **dadurch gekennzeichnet, dass** ein zwischen Ventilklappe (14) und Innenwand des Ventilrohrs (13) in der Schließstellung der Ventilklappe (14) wirksames Dichtungselement (22) an der Ventilklappe (14) über deren Umfang umlaufend vorstehend angeordnet ist.

9. Klappenventil nach Anspruch 8, **dadurch gekennzeichnet, dass** das Ventilrohr (13) einen kreisrunden lichten Querschnitt aufweist und der Durchmesser der kreisrunden Ventilklappe (14) gleich oder wenig kleiner als der lichte Durchmesser des Ventilrohrs (13) bemessen ist und dass die Ventilklappe (14) an der Klappenwelle (15) so ausgerichtet ist, dass in ihrer Schließstellung ihre Flächennormale (16) mit der Ventilrohrachse (18) fluchtet.

10. Klappenventil nach einem der Ansprüche 1 - 7, **dadurch gekennzeichnet, dass** die Ventilklappe (14) in Form und Fläche dem lichten Querschnitt des Dünnwandrohrs (24) angepasst ist.

11. Klappenventil nach einem der Ansprüche I bis 10, **dadurch gekennzeichnet, dass** das Dünnwandrohr (24) einen kreisrunden lichten Querschnitt aufweist und der Durchmesser der kreisrunden Ventilklappe (14) gleich dem lichten Durchmesser des Dünnwandrohrs (24) bemessen ist und dass die Ventilklappe (14) bezüglich der Klappenwelle (15) so ausgerichtet ist, dass in ihrer Schließstellung ihre Flächennormale (16) mit der Achse (18) des Dünnwandrohrs (24) fluchtet.

12. Klappenventil nach einem der Ansprüche 1 bis 10, **dadurch gekennzeichnet, dass** das Dünnwandrohr (24) einen kreisrunden lichten Querschnitt aufweist und der Durchmesser der kreisrunden Ventilklappe (14) größer als der lichte Durchmesser des Dünnwandrohrs (24) bemessen ist und dass die Ventilklappe (14) bezüglich der Klappenwelle (15) so ausgerichtet ist, dass in ihrer Schließstellung ihre Flächennormale (16) mit der Achse (18) des Dünnwandrohrs (24) einen spitzen Winkel (β) einschließt.

13. Klappenventil nach einem der Ansprüche 1 bis 12, **dadurch gekennzeichnet, dass** das Dünnwandrohr (24) in einem steifen Rohrstutzen (23) mit Radialspiel aufgenommen und mit seinem einen Ende an dem Rohrstutzen (23) befestigt ist.

14. Klappenventil nach einem der Ansprüche 1 - 13, **dadurch gekennzeichnet, dass** die Klappenwelle (15) motorisch antreibbar ist.

15. Klappenventil nach einem der Ansprüche 4 -14, **gekennzeichnet durch** seine Verwendung als Abgasrückführventil im Ansaugtrakt einer Brennkraftmaschine, indem das weitere Rohr von einem zur Brennkraftmaschine geführten Luftansaugrohr (10) gebildet und das Ventilrohr (13) an einem Abgaskanal der Brennkraftmaschine angeschlossen ist.

16. Klappenventil nach Anspruch 3, **gekennzeichnet durch** seine Verwendung als Abgasrückführventil in der Abgasrückführleitung einer Brennkraftmaschine.

## Claims

1. Flap valve for controlling a gas flow, having a valve pipe (13) which guides the gas flow and a valve flap (14) which is arranged in the valve pipe (13), can be pivoted between an open position and a closed position, is seated fixedly in terms of rotation on an adjustable flap shaft (15) and covers an inside valve-pipe cross section in the valve pipe (13) in the closed position and opens it to its maximum extent in the open position, the flap shaft (15) being oriented in such a way that its axis (17) encloses an acute angle (α) with the axis (18) of the valve pipe (13), **characterized in that** the valve pipe (13) is configured as an elastically deformable thin-walled pipe (24).

2. Flap valve according to Claim 1, **characterized in that** the angle (α) between the axis (17) of the flap shaft (15) and the axis (18) of the valve pipe (13) lies in the angular range between equal to or greater than 10° and smaller than 90°, and is preferably 45°.

3. Flap valve according to Claim 1 or 2, **characterized in that** the valve pipe (13) is integrated in a housing (26) in which the flap shaft (15) is mounted rotatably, and **in that** the housing (26) has two connecting flanges (27, 28) which are each assigned to a valve-pipe end.

4. Flap valve according to Claim 1 or 2, **characterized in that** the valve pipe (13) is inserted in a gastight manner into a casing opening (11) which is provided in the casing of a further pipe (10) which guides a gas flow, and the flap shaft (15) is oriented transversely with respect to the axis (19) of the further pipe (10).

5. Flap valve according to Claim 4, **characterized in that** the flap shaft (15) is mounted rotatably in the wall of the further pipe (10) and projects with one shaft end through the casing opening (11) of the further pipe (10) into the valve pipe (13) and bears the valve flap (14) at this shaft end.

6. Flap valve according to Claim 3, **characterized in that** the end of the flap shaft (15) which is remote from the flap protrudes from the housing (26) and **in that** an actuating motor (20) and a restoring spring (21) which rotates the flap shaft (15) back into a basic position act on this shaft end, and **in that** the basic position of the flap shaft (15) is defined by a stop.

7. Flap valve according to Claim 6, **characterized in that** the basic position of the flap shaft (15) is set in such a way that the valve flap (14) assumes its closed position in the basic position of the flap shaft (15).

8. Flap valve according to one of Claims 1 to 7, **characterized in that** a seal element (22) which acts in the closed position of the valve flap (14) between the valve flap (14) and the inner wall of the valve pipe (13) is arranged on the valve flap (14) so as to protrude circumferentially over its periphery.

9. Flap valve according to Claim 8, **characterized in that** the valve pipe (13) has a circular inside cross section and the diameter of the circular valve flap (14) is equal to or a little smaller than the inside diameter of the valve pipe (13), and **in that** the valve flap (14) is oriented on the flap shaft (15) in such a way that its surface perpendicular (16) is aligned with the valve-pipe axis (18) in its closed position.

10. Flap valve according to one of Claims 1 to 7, **characterized in that** the shape and the surface area of the valve flap (14) are adapted to the inside cross section of the thin-walled pipe (24).

11. Flap valve according to one of Claims 1 to 10, **characterized in that** the thin-walled pipe (24) has a circular inside cross section and the diameter of the circular valve flap (14) is equal to the inside diameter of the thin-walled pipe (24), and **in that** the valve flap (14) is oriented with regard to the flap shaft (15) in such a way that its surface perpendicular (16) is aligned with the axis (18) of the thin-walled pipe (24) in its closed position.

12. Flap valve according to one of Claims 1 to 10, **characterized in that** the thin-walled pipe (24) has a circular inside cross section and the diameter of the circular valve flap (14) is larger than the inside diameter of the thin-walled pipe (24), and **in that** the valve flap (14) is oriented with regard to the flap shaft (15) in such a way that, in its closed position, its surface perpendicular (16) encloses an acute angle (β) with the axis (18) of the thin-walled pipe (24).

13. Flap valve according to one of Claims 1 to 12, **characterized in that** the thin-walled pipe (24) is accommodated with radial play in a rigid tubular connection piece (23) and is fastened with its one end to the tubular connection piece (23).

14. Flap valve according to one of Claims 1 to 13, **characterized in that** the flap shaft (15) can be driven by a motor.

15. Flap valve according to one of Claims 4 to 14, **characterized by** its use as an exhaust-gas recirculation valve in the intake section of an internal combustion engine, in that the further pipe is formed by an air intake manifold (10) which leads to the internal combustion engine, and the valve pipe (13) is connected to an exhaust-gas duct of the internal combustion engine.

16. Flap valve according to Claim 3, **characterized by** its use as an exhaust-gas recirculation valve in the exhaust-gas recirculation line of an internal combustion engine.

## Revendications

1. Soupape à clapet pour commander un courant gazeux, comportant un tube de soupape (13) qui guide le courant gazeux et un clapet de soupape (14) qui, placé dans le tube de soupape (13) et pivotant entre une position d'ouverture et une position de fermeture, est solidaire en rotation sur un arbre de clapet (15) mobile, et qui recouvre en position de fermeture une section transversale intérieure du tube de soupape dans le tube de soupape (13) et la libère au maximum en position d'ouverture, l'arbre de clapet (15) étant orienté de telle manière que son axe (17) fasse un angle (α) aigu par rapport à l'axe (18) du tube de soupape (13),
**caractérisée en ce que**
le tube de soupape (13) est un tube à paroi mince (24) élastiquement déformable.

2. Soupape à clapet selon la revendication 1,
**caractérisée en ce que**
l'angle (a) entre l'axe (17) de l'arbre de clapet (15) et l'axe (18) du tube de soupape (13) se trouve dans une plage angulaire supérieure ou égale à 10° et inférieure à 90°, et de préférence est de 45°.

3. Soupape à clapet selon la revendication 1 ou 2,
**caractérisée en ce que**
le tube de soupape (13) est intégré dans un boîtier (26) dans lequel l'arbre de clapet (15) est monté mobile en rotation, et
le boîtier (26) présente deux brides de raccordement (27, 28) dont chacune est associée à une extrémité de tube de soupape.

4. Soupape à clapet selon la revendication 1 ou 2,
**caractérisée en ce que**
le tube de soupape (13) est introduit de façon étanche aux gaz dans une ouverture de surface latérale (11) prévue dans la surface latérale d'un autre tube (10) qui guide un courant gazeux, et
l'arbre de clapet (15) est orienté transversalement à l'axe (19) de l'autre tube (10).

5. Soupape à clapet selon la revendication 4,
**caractérisée en ce que**
l'arbre de clapet (15) est mobile en rotation dans la paroi de l'autre tube (10) et a une extrémité qui dépasse dans le tube de soupape (13) à travers l'ouverture de surface latérale (11) de l'autre tube (10) et qui porte le clapet de soupape (14).

6. Soupape à clapet selon la revendication 3,
**caractérisée en ce que**
l'extrémité éloignée du clapet de l'arbre de clapet (15) fait saillie hors du boîtier (26), et porte un servomoteur (20) et un ressort de rappel (21) qui fait revenir l'arbre de clapet (15) dans une position de base, et cette position de base de l'arbre de clapet (15) est déterminée par une butée.

7. Soupape à clapet selon la revendication 6,
**caractérisée en ce que**
la position de base de l'arbre de clapet (15) est réglée de telle manière que le clapet de soupape (14) prend sa position de fermeture lorsque l'arbre de clapet (15) est en position de base.

8. Soupape à clapet selon l'une des revendications 1 à 7,
**caractérisée en ce qu'**
un élément d'étanchéité (22) agissant entre le clapet de soupape (14) et la paroi intérieure du tube de soupape (13) lorsque le clapet de soupape (14) est en position de fermeture, est placé sur le clapet de soupape (14) en faisant saillie sur tout son pourtour.

9. Soupape à clapet selon la revendication 8,
**caractérisée en ce que**
le tube de soupape (13) a une section transversale intérieure circulaire et le diamètre du clapet de soupape (14) circulaire est égal ou inférieur au diamètre intérieur du tube de soupape (13),
et le clapet de soupape (14) est orienté par rapport à l'arbre de clapet (15) de telle manière que dans sa position de fermeture sa normale de surface (16) est alignée avec l'axe (18) du tube de soupape.

10. Soupape à clapet selon l'une des revendications 1 à 7,
**caractérisée en ce que**
quant à sa forme et à sa surface, le clapet de soupape (14) est ajusté à la section transversale intérieure du tube à paroi mince (24).

11. Soupape à clapet selon l'une des revendications 1 à 10,
**caractérisée en ce que**
le tube à paroi mince (24) a une section transversale intérieure circulaire et le diamètre du clapet de soupape (14) circulaire est égal au diamètre intérieur du tube à paroi mince (24), et
le clapet de soupape (14) est orienté par rapport à l'arbre de clapet (15) de telle manière que dans sa position de fermeture sa normale de surface (16) est alignée avec l'axe (18) du tube à paroi mince (24).

12. Soupape à clapet selon l'une des revendications 1 à 10,
**caractérisée en ce que**
le tube à paroi mince (24) a une section transversale intérieure circulaire et le diamètre du clapet de soupape (14) circulaire est supérieur au diamètre intérieur du tube à paroi mince (24), et
le clapet de soupape (14) est orienté par rapport à l'arbre de clapet (15) de telle manière que dans sa position de fermeture sa normale de surface (16) forme un angle aigu (β) avec l'axe (18) du tube à paroi mince (24).

13. Soupape à clapet selon l'une des revendications 1 à 12,
**caractérisée en ce que**
le tube à paroi mince (24) est logé dans une tubulure (23) rigide avec un jeu radial et est fixé par une de ses extrémités à la tubulure (23).

14. Soupape à clapet selon l'une des revendications 1 à 13,
**caractérisée en ce que**
l'arbre de clapet (15) peut être entraîné par moteur.

15. Soupape à clapet selon l'une des revendications 4 à 14,
**caractérisée en ce qu'**
elle est utilisée comme soupape de recyclage des gaz d'échappement dans le conduit d'aspiration d'un moteur à combustion interne, l'autre tube est un tube d'aspiration d'air (10) guidé vers le moteur à combustion interne et le tube de soupape (13) est raccordé à un canal de gaz d'échappement du moteur à combustion interne.

16. Soupape à clapet selon la revendication 3,
**caractérisée en ce qu'**
elle est utilisée comme soupape de recyclage des gaz d'échappement dans la conduite de recyclage des gaz d'échappement d'un moteur à combustion interne.
